# EUROPÄISCHE PATENTSCHRIFT

(11) **EP 1 092 099 B1**
(45) Veröffentlichungstag und Bekanntmachung des Hinweises auf die Patenterteilung: **15.05.2002**
(21) Anmeldenummer: 99939348.1
(22) Anmeldetag: 16.06.1999
(51) Int. Cl.: F16B 33/02, F01D 25/26

(54) **GEWINDE SOWIE SCHRAUBVERBINDUNG FÜR EINE HOHE ANWENDUNGSTEMPERATUR**
THREAD AND SCREWED ASSEMBLY USED AT HIGH TEMPERATURES
FILETAGE ET ASSEMBLAGE VISSE POUR TEMPERATURE D'UTILISATION ELEVEE

(30) Priorität: 26.06.1998 DE 19828453
(43) Veröffentlichungstag der Anmeldung: 18.04.2001
(73) Patentinhaber: SIEMENS AKTIENGESELLSCHAFT, 80333 München (DE)
(72) Erfinder: HAJE, Detlef, D-46236 Bottrop (DE); WIEGHARDT, Kai, D-44869 Bochum (DE)
(86) Internationale Anmeldenummer: DE9901769
(87) Internationale Veröffentlichungsnummer: WO0000750

(56) Entgegenhaltungen:
- FR-A- 763 012
- US-A- 2 770 997
- US-A- 3 210 096
- US-A- 3 506 377
- US-A- 4 191 486

## Beschreibung

Die Erfindung betrifft ein Gewinde, welches sich entlang einer Gewindeachse erstreckt, mit einer Gewindestruktur für einen Eingriff in ein Gegengewinde mit einer Gegengewindestruktur zur Herstellung einer Schraubverbindung. Die Erfindung betrifft weiterhin eine Schraubverbindung für eine hohe Anwendungstemperatur.

Schraubverbindungen bestehend aus einer Schraube mit einem Bolzengewinde und einem Gegengewinde (Mutterngewinde) finden in einer Vielzahl von technischen Gebieten, wie dem Maschinenbau, dem Anlagenbau sowie in der Elektrotechnik, Anwendung. Sie dienen in der Regel dazu, zwei Teile miteinander zu verbinden und zu befestigen. Es gibt hierbei das eine Extrem der kleinen Schraubverbindungen, welche bei Raumtemperatur eingesetzt werden und geringe Kräfte übertragen müssen, sowie das andere Extrem der großen Schraubverbindungen, die bei hohen Temperaturen große Kräfte übertragen müssen.

Aus "Schraubenvademecum" von Illgner, K. H.; Blume, D., 1976, Fa. Bauer& Schaurte Karcher, Neuss, Deutschland, insbesondere Abschnitt 3.5, ist es bekannt, daß bei elastischen Verformungen von Gewinden einer Schraubverbindung an unterschiedlichen Kerbstellen unterschiedliche Kerbwirkzahlen vorherrschen, die die Dauerhaltbarkeit beeinflussen. Für die Dauerhaltbarkeit ist der Anfangsbereich, in dem Gewinde und Gegengewinde in Belastungsrichtung ineinandergreifen, bestimmend. Zur Reduzierung der in diesem Anfangsbereich, bei gleicher Gewindestruktur von Gewinde und Gegengewinde, auftretenden überproportional hohen Belastungen kann die Form des Mutterngewindes geändert werden. Diese Formänderung besteht darin, daß der Außendurchmesser des Mutternkörpers in dem Anfangsbereich am kleinsten ist und entgegen der Belastungsrichtung monoton ansteigt (Zugmutter, ringförmig eingedrehte Mutter). Weitere Methoden zur Entlastung des Anfangsbereiches bestehen darin, ein übergreifendes Mutterngewinde, ein Aussenken des Mutterngewindes sowie Entlastungskerben in dem Anfangsbereich vorzusehen.

Aus der EP 0 008 766 B1 geht eine Gewindeverbindung zwischen Teilen mit unterschiedlichen linearen Wärmeausdehnungskoeffizienten hervor. Zur Minimierung von Spannungen in der Gewindeverbindung und zur Verwendung der Gewindeverbindung bei erhöhten Arbeitstemperaturen ist bei Umgebungstemperatur eine Verjüngung vorgesehen. Die Verjüngung ist dabei durch eine lineare Änderung des Radialspiels entlang der Gewindeachse hergestellt, wobei das Radialspiel in Richtung der Belastung des Teils mit dem höheren linearen Wärmeausdehnungskoeffizienten zunimmt. Durch diese kegelige Ausführung der Verjüngung über die volle Länge des Gewindeteils ist eine zuverlässige Spannung der Gewindeverbindung nur im heißen Zustand möglich. Dagegen ist im kalten Zustand, d.h. bei Umgebungstemperatur, eine effiziente Übertragung der Schraubenkraft auf die Gewindeverbindung und eine sichere Aufnahme der Vorspannkraft nicht gegeben.

In der US 2,770,997 ist eine zylindrische Schraubverbindung mit einem Mutterngewinde und einem mit dem Mutterngewinde sich im Eingriff befindenden Bolzengewinde beschrieben. Das Material des Mutterngewindes und des Bolzengewindes weisen dabei unterschiedliche thermische Ausdehnungskoeffizienten auf, beispielsweise ein keramisches Material für das Mutterngewinde und ein Material mit einem größeren thermischen Ausdehnungskoeffizienten - ein Metall - für das Bolzengewinde. Um einen Einsatz der Keramik-Metall-Schraubverbindung über einen großen Temperaturbereich von etwa 20 °C bis 900 °C zu ermöglichen, ist in der zylindrischen Schraubverbindung entlang der Zylinderachse eine Anpassung der Gewindesteigung von Mutterngewinde und Bolzengewinde vorgesehen, so daß Fehlanpassungen bei hohen Temperaturen teilweise kompensiert werden können. Hierzu ist die Gewindesteigung von Mutterngewinde und Bolzengewinde so ausgestaltet, dass sich bei einer Temperaturobergrenze eine Anpassung der Gewindesteigung ergibt.

Aufgabe der Erfindung ist es, ein Gewinde, welches sich entlang einer Gewindeachse erstreckt, für ein Bauteil anzugeben mit im wesentlichen homogener Lastverteilung entlang der Gewindeachse. Eine weitere Aufgabe der Erfindung besteht darin, eine Schraubverbindung für eine hohe Anwendungstemperatur anzugeben.

Erfindungsgemäß wird die auf ein Gewinde gerichtete Aufgabe gelöst durch ein Gewinde eines ersten Bauteils, welches Gewinde sich entlang einer Gewindeachse erstreckt, mit einer Gewindestruktur für einen Eingriff in ein Gegengewinde eines zweiten Bauteils mit einer Gegengewindestruktur zur Herstellung einer Schraubverbindung, wobei das elastische und/oder thermische Verformungsverhalten des ersten Bauteils und des zweiten Bauteils voneinander verschieden sind, wobei die Gewindestruktur eine Verformungsvorwegnahme zur Kompensation einer elastischen und/oder thermischen Verformung bei einer vorgebbaren thermomechanischen Belastung sowie einen zylindrischen Gewindebereich konstanten Durchmessers aufweist, wobei ein weiterer Gewindebereich vorgesehen ist, der axial an den zylindrischen Gewindebereich angrenzt, wobei in dem weiteren Gewindebereich der Durchmesser entlang der Gewindeachse variiert.

Das unterschiedliche Verformungsverhalten kann hierbei durch eine unterschiedliche Steifigkeit der Bauteile, z. B. auch bei im wesentlichen gleichen Materialien der Bauteile mit gleichem Elastizitätsmodul, hervorgerufen sein, selbst im kalten Zustand der Bauteile. Das erste Bauteil weist in der Umgebung des Gewindes ein erstes Material (erster Werkstoff) und das zweite Bauteil in der Umgebung des Gegengewindes ein zweites Material (zweiter Werkstoff) auf. Die beiden Materialien können gleiche, ähnliche oder deutlich verschiedene elastische, plastische und/oder thermische Materialeigenschaften besitzen. Vorzugsweise handelt es sich hierbei um Materialien mit unterschiedlicher chemischer Zusammensetzung oder Legierungen mit zumindest unterschiedlichen Werkstoffeigenschaften. Es können aber auch Legierungen mit gleicher Werkstoffzusammensetzung und gleichen Werkstoffeigenschaften verwendet werden.

Mit dem erfindungsgemäßen Gewinde erfolgt erstmals eine gezielte Verformungs-Vorwegnahme, gegenüber der bisherigen Praxis lediglich eine Reduzierung der erwarteten Spannungsüberhöhungen dadurch zu erzielen, daß die Steifigkeit einer Mutter an die Steifigkeit einer Schraube angepaßt ist. Gleichzeitig ist erstmals eine zuverlässige Kraftübertragung und Lastaufnahme durch das Gewinde auch im unverformten Zustand, d.h. im Montagezustand bei Raumtemperatur, gewährleistet.

Hinsichtlich thermischer Verformungen geht die Erfindung hierbei von der Erkenntnis aus, daß für Verschraubungen bei hohen Temperaturen erhebliche Anforderungen an die eingesetzten Schraubenwerkstoffe bestehen. Oberhalb gewisser Temperaturgrenzen, z.B. über 500 °C, insbesondere über 580 °C, bei Dampfturbinen, können Schraubenwerkstoffe auf Eisenbasis nicht mehr oder (wegen zu geringer Festigkeit) nicht mehr sinnvoll eingesetzt werden. Die dann in Frage kommenden Schraubenwerkstoffe besitzen andere (wesentlich größere) Wärmeausdehnungskoeffizienten als die bei diesen Temperaturen üblicherweise eingesetzten hochwarmfesten Mutternwerkstoffe, z.B. Flanschwerkstoffe, auf Eisenbasis. Bei einer Temperaturerhöhung entsteht durch thermische Differenzdehnungen im Gewindebereich eine Lastumlagerung auf den ohnehin hochbelasteten ersten Gewindebereich (Eingriffanfangsbereich). Dies steht dem Einsatz von Schraubenwerkstoffen höherer Wärmeausdehnung entgegen, da so unzulässig hohe Spannungswerte auftreten können. Erfindungsgemäß wird somit erstmals eine verformungsgerechte Gestaltung der Gewinde angegeben, so daß die zusätzliche Gewindebeanspruchung bei hohen Temperaturen unterbunden oder zumindest vermindert wird und damit auch der Einsatz von Materialien mit unterschiedlichem thermischen Ausdehnungsverhalten für Gewinde und Gegengewinde ermöglicht ist.

Dies ist insbesondere bei einer Verwendung in Dampfturbinen bei Dampftemperaturen von über 550 °C, insbesondere über 580 °C vorteilhaft. Bei diesen hohen Anwendungstemperaturen kann daher von Materialpaarungen von Flansch- und Verschraubungswerkstoffen abgesehen werden, die hinsichtlich ihres Wärmedehnungsverhaltens gleichartig sind oder deren Wärmedehnungsverhalten derart ist, daß sich die Gewindebeanspruchung bei Temperaturerhöhung nicht unzulässig an bestimmten Orten konzentriert. Bei solchen Materialpaarungen wäre es nämlich bei zunehmender Temperatur erforderlich, größere Schraubenquerschnitte vorzusehen. Dies ist allerdings begrenzt durch über der Temperatur abnehmende Langzeitfestigkeit der Werkstoffe und durch mögliche Werkstoffeinsatzgrenzen, z. B. infolge auftretender werkstofftechnischer Effekte wie Zeitstandkerbversprödung. Dieser Nachteil gleichartiger Werkstoffe wird nunmehr durch die Verwendungsmöglichkeit unterschiedlicher Werkstoffe (Materialien) ausgeräumt.

Bei hohen Temperaturen und der Verwendung hochwarmfester Werkstoffe, z. B. bei 10%-Chrom-Stählen für Flansche für Schrauben auf Nickelbasis, z. B. aus Nimonic 80A, ergibt sich bei konventionellen Gewinden und Gegengewinden eine thermische Dehnungsdifferenz, die eine Höherbeanspruchung des ersten Gewindebereiches (Eingriffanfangsbereiches) durch Lastumlagerung bewirkt. Dies resultiert daraus, daß der Bolzenwerkstoff eine stärkere Wärmeausdehnung besitzt als der Flanschwerkstoff; ausgehend von der ersten tragenden Gewindeflanke einer Schraubverbindung bewirkt dies eine Längung des Bolzengewindes relativ zum Mutterngewinde. Dies führt zu einer Entlastung der nachfolgenden Flanken, sowie unter Umständen zu einem Außer-Eingriff-Kommen von tiefer in der Schraubverbindung liegender Flanken durch den thermisch verursachten Teilungsfehler und damit zu einer zusätzlichen Belastung des ersten Gewindebereiches (Eingriffanfangsbereiches). Unter Umständen könnte dies eine deutliche Belastungsreduzierung erfordern und die Betriebssicherheit der Schraubverbindung insgesamt in Frage stellen. Auch diese Problematik ist durch die die erfindungsgemäße thermische Differenzdehnung berücksichtigende Verformungsvorwegnahme des Gewindes gelöst, so daß der Eingriffanfangsbereich sicher bis zu der Anwendungstemperatur und höheren Temperaturen geringer belastet ist als eine zulässige kritische Belastung.

Das Gewinde der Schraubverbindung ist hierbei verformungsgerecht so gestaltet, daß sich bei der Anwendungstemperatur infolge thermischer Dehnung ein günstiges, durch die thermische Verformung selbst erzeugtes Tragverhalten einstellt. Dabei wird die thermische Gewindeverformung vorab ausgeglichen. Das Gewinde wird so gefertigt, daß gezielte Abweichungen gegenüber einem konventionellen Gewinde, z. B. in Gewindeform, Kegeligkeit, Teilung oder Gewindeprofil bestehen, welche bei der vorgesehenen Anwendungstemperatur durch die thermische Dehnung ganz oder teilweise kompensiert werden. Es stellt sich somit infolge der unterschiedlichen Wärmedehnungen eine gleichmäßigere Verteilung des Tragverhaltens ein. Die Berucksichtigung der thermischen Dehnung ist für jede Anwendungstemperatur und Anwendungsbelastung (Kraftübertragung) für jedes Gegengewinde analytisch oder über kommerziell erhaltbare Berechungsprogramme, z. B. basierend auf der Finite Element Methode (FEM), der Boundary Element Methode (BEM) oder der Finite Differenzen Methoden, vorab einfach möglich. Für die Auslegung des Gewindes kann hierbei in den Berechnungsverfahren auf die bekannten thermomechanischen Materialgleichungen zurückgegriffen werden, in denen die unterschiedlichen Elastizitätsmoduln und die thermischen Ausdehnungskoeffizienten Berücksichtigung finden. Die Fertigung des Gewindes mit der Gewindeform kann, insbesondere für geschnittene Bolzengewinde, mit numerisch gesteuerten Werkzeugmaschinen einfach durchgeführt werden.

Es versteht sich daher, daß die erfindungsgemäße Verformungsvorwegnahme auch bei rein elastischen sowie elastisch-plastischen Verformungen bei im wesentlichen konstanter Temperatur anwendbar ist. Somit erfolgt auch bei reinen elastischen oder elastisch-plastischen Verformungen eine Verbesserung der Dauerhaltbarkeit des Eingriffanfangsbereiches, welcher für die Dauerhaltbarkeit der gesamten Schraubverbindung maßgebend ist. Je nach Ausgestaltung kann eine Verbesserung dieses Eingriffanfangsbereiches bis zu einem Faktor zwei erfolgen, so daß für die Dauerhaltbarkeit der Schraubverbindung ein anderer Bereich der Schraube maßgebend wird. Das Gewinde eignet sich daher auch in weiten Bereichen der konventionellen Schraubtechnik bei relativ kleinen oder konstruktiv einfachen Verschraubungen, bei denen lediglich ein unterschiedliches elastisches Deformationsverhalten von Gewinde und Gegengewinde der verschraubten Bauteile vorliegt. Selbstverständlich kann auch eine Verformungsvorwegnahme für thermische und elastische oder elastisch-plastische Verformungen berücksichtigt werden.

Im kalten Zustand, d. h. bei einer Normaltemperatur, besitzt das Gewinde aufgrund der die Formänderung berücksichtigenden Geometrie ein Tragverhalten, das von einem konventionellen Gewinde abweicht und sich auch auf wenige Gewindegänge konzentrieren kann. Dies ist unter anderem tolerierbar, da die Belastbarkeit der Schrauben- und Flanschwerkstoffe im kalten Zustand wesentlich höher als bei hohen Anwendungstemperaturen ist. Bei einer Anwendung in einer Dampfturbine tritt zudem die maximale Beanspruchung der Verschraubungen in der Regel bei verschraubten druckführenden Teilen (z. B. Turbinengehäuse, verschraubte Deckel) erst bei voller Druckbeaufschlagung auf. Diese volle Beaufschlagung erfolgt bei einer Dampfturbine prinzipbedingt bei erhöhter Temperatur, für die die Gewindegeometrie gezielt verbessert ist.

Gleichwohl können auch Maßnahmen getroffen werden, die den Effekt der höheren Beanspruchungen im kalten Zustand gezielt vermindern. Vorzugsweise ist dabei ein Gewindebereich als normales Gewinde ausgeführt, durch den im kalten Zustand die Schraubenkraft zuverlässig getragen wird. Bei einer Temperaturerhöhung wird dieser Gewindebereich durch andere verformungsvorwegnehmende Gewindebereiche entlastet. Durch diese Ausgestaltung ist eine Vergleichmäßigung des Tragverhaltens des Gewindes über einen ausgedehnten Temperaturbereich, d.h. z.B. von Raumtemperatur bis zu der Anwendungstemperatur, erreicht.

In einer weiteren bevorzugten Ausgestaltung weist das Gewinde einen Durchmesser entlang der Gewindeachse auf, der zumindest bereichsweise variiert, insbesondere monoton zunimmt. Die Gewindestruktur kann hierbei zumindest in einem Gewindebereich gewölbt ausgeführt sein, wobei eine Tangente an eine Hüllkurve des Gewindes mit einer Parallelen zur Gewindeachse einen spitzen Winkel einschließt. Dieser Winkel nimmt kontinuierlich, insbesondere monoton ab. Er kann gegen Null gehen. Die Gewindestruktur kann hierbei auch zumindest in einem Gewindebereich kegelförmig mit einem gegenüber der Gewindeachse spitzen Kegelwinkel ausgeführt sein. Ein solcher Kegelwinkel beträgt vorzugsweise zwischen 0,1° und 1,0°, insbesondere etwa 0,3°. An den kegelförmigen Gewindebereich schließt sich vorzugsweise entgegen einer Belastungsrichtung, d.h. in Richtung weg von dem Eingriffanfangsbereich der zylindrische Gewindebereich konstanten Durchmessers an.

Hierbei erfolgt bevorzugt eine gezielte Rücknahme der ersten Gewindegänge radial aus dem Gewinde heraus (Durchmesser des Außengewindes im Gewindebeginn reduziert oder Innengewindedurchmesser in diesem Bereich erhöht). Die hierdurch bedingte radiale Rücknahme der Flanken von den Gewindezähnen bewirkt ein Spiel zwischen zwei benachbarten Flanken des Gewindes und des Gegengewindes im ersten Gewindebereich (Eingriffanfangsbereich). Bei unverformtem (idealem) Gewinde kommen die so gestalteten Gewindezähne nicht zum Eingriff; beim Spannen der Schrauben können die Flanken wieder in Kontakt kommen, dies ist jedoch nicht zwingend. Hierdurch ist auch bei rein elastischen Deformationen eine Vergleichmäßigung der Lasten im Gewinde entlang der Gewindeachse erreicht. Bei entsprechender Ausgestaltung des Gewindes kommen bei thermischer und/oder elastischer Verformung die Gewindezähne in Eingriff und übernehmen einen Teil der Schraubenkraft. Die durch die geänderte Formgebung höher belasteten Flanken im Inneren der Schraubverbindung werden somit gegenüber dem kalten Zustand entlastet. Dabei erreicht die Gewindebeanspruchung des ersten Gewindebereiches nicht den Wert, der bei normaler Gewindegestaltung auftreten würde.

Durch geeignete Wahl des Kegelwinkels oder durch andere geeignete Durchmesservariation können die Auswirkungen der thermischen Dehnung gut kompensiert werden. Der kegelige Gewindebereich kann unterschiedliche Steigungen besitzen und mit zylindrischen Gewindebereichen kombiniert werden, um z. B. ein besseres Tragverhalten im kalten Zustand zu erreichen. Weiterhin kann hierdurch eine zusätzliche Kompensation der bei normalen Gewinden auftretenden (durch elastische Verformung bedingten) hohen Beanspruchung des ersten Gewindeganges erzielt werden. Ein bevorzugter Kegelwinkel für einen thermischen Ausgleich bei einer Anwendungstemperatur von etwa 600 °C bei einem 10%-Chrom-Stahl für ein Mutterngewinde und eine Nickelbasislegierung, z. B. Nimonic 80A, für ein Bolzengewinde (600°C) beträgt ca. 0,3°. Der Kegelwinkel wird dabei vorzugsweise so gewählt, daß der erste Gewindebereich (Eingriffanfangsbereich) bei der Anwendungstemperatur in Eingriff und zum Tragen kommt.

Gegenüber kegeligen Gewinden, die zur Erzielung einer Dichtwirkung im Gewinde oder als Losdrehsicherung durch radiales Klemmen dienen und bei denen hierfür entweder zwei Kegelgewinde gleichen Kegelwinkels gepaart oder ein kegeliges mit einem zylindrischen Gewinde so gepaart wird, daß das Gewindespiel mit fortschreitendem Einschrauben geringer wird, wird bei obigem kegeligen Gewinde das Gewindespiel zu den ersten Gewindezähnen hin größer, um diese im Betriebszustand gezielt zu entlasten.

In einer weiteren bevorzugten Ausgestaltung weist das Gewinde zumindest einen Gewindebereich mit sich entlang der Gewindeachse ändernder Teilung auf. Weiter bevorzugt schließt sich entgegen der Belastungsrichtung an den Gewindebereich mit sich ändernder Teilung ein Gewindebereich mit konstanter Teilung an.

Vorzugsweise erfolgt eine gezielte Einbringung einer Teilungsabweichung zwischen dem Gewinde und dem Gegengewinde, um die durch thermische und/oder elastisch-plastische Ausdehnung auftretende Teilungsabweichung zu kompensieren. Dabei ist die Teilung eines Bolzengewindes kleiner als die des zugeordneten Mutterngewindes, welches einen geringeren thermischen Ausdehnungskoeffizienten aufweist. Bei der Anwendungstemperatur stellt sich durch die stärkere thermische Ausdehnung des Bolzens eine Vergleichmäßigung der Teilung ein. Die Teilung kann über der Gewindelänge variieren. Vorzugsweise ist ein Gewindebereich ohne Teilungsabweichung für ein günstiges Verhalten im kalten Zustand sowie ein Gewindebereich mit erhöhter Teilungsabweichung im Gewindebeginn zur Kompensation der Zusatzbelastung des ersten Gewindebereiches vorgesehen.

Die Montier- und Demontierbarkeit des Bolzens kann dabei beispielsweise durch Aufbringen eines Temperaturunterschiedes zwischen Bolzengewinde und Mutterngewinde, z. B. einer Aufheizung des Bolzens vor dem Einschrauben, oder durch Vorsehen entsprechend erhöhter Flankenspiele sichergestellt werden.

In einer weiteren Ausgestaltung weist das Gewinde einen Gewindebereich mit sich änderndem Gewindeprofil auf. Hierzu kann sich der Flankenwinkel einer Flanke entlang der Gewindeachse ändern. Die Änderung kann monoton oder stufenweise erfolgen, wobei im letzteren Fall zwei Bereiche mit jeweils konstantem aber unterschiedlichem Gewindeprofil aneinandergrenzen. Es ist ebenfalls möglich, daß die fallende Flanke und die steigende Flanke eines Gewindezahnes einen jeweils verschiedenen Flankenwinkel aufweisen. Bevorzugt schließt sich an den Gewindebereich mit sich änderndem Gewindeprofil ein, insbesondere ein zylindrischer Gewindebereich mit konstantem Gewindeprofil an.

Bei einer Anpassung des Gewindeprofils kann die Steifigkeit sowie das In-Eingriff-Kommen der einzelnen Flanken beeinflußt werden. So sind z. B. Änderungen des Flankenwinkels, unterschiedliche Teilflankenwinkel oder andere Geometrieänderungen der Gewindezähne möglich.

Es ist ebenfalls möglich, daß ein Gewinde eine Kombination einzelner oder sämtlicher Maßnahmen zur Verformungsvorwegnahme wie Teilungsänderung, Gewindeprofiländerung und Durchmessergestaltung beinhaltet. Sie können jeweils an einem Gewinde eines Verschraubungspartners (Bolzengewinde oder Mutterngewinde) oder an beiden vorgenommen werden.

Vorzugsweise ist das Gewinde für einen Einsatz bei einer Anwendungstemperatur von über 500 °C, insbesondere über 580°C, ausgelegt. Es ist bevorzugtermaßen ein Bolzengewinde an einer Schraube aus einer Nickelbasis-Legierung. Für ein Bauteil kann zumindest in der Umgebung des Gewindes oder des Gegengewindes alternativ zu einer Nickelbasis-Legierung eine Kobaltbasis-Legierung oder ein austenitischer Stahl vorgesehen sein.

Die auf eine Schraubverbindung gerichtete Aufgabe wird gelöst durch eine Schraubverbindung für eine hohe Anwendungstemperatur mit einem Gewinde, bei der bei einem Ineinandergreifen des Gewindes mit einem Gegengewinde bei einer Normaltemperatur unterhalb der Anwendungstemperatur in einem Eingriffanfangsbereich ein Spiel zwischen der Gewindestruktur des Gewindes und der Gegengewindestruktur des Gegengewindes verbleibt oder zumindest eine Entlastung der in Kontakt stehenden Flanken gegeben ist. Die Schraubverbindung ist vorzugsweise an einem Flansch einer Dampfturbine hergestellt. Der Flansch besteht vorzugsweise aus einem Chromstahl mit einem Anteil von 9 Gew.% bis 12 Gew.% Chrom.

Anhand der in der Zeichnung dargestellten Ausführungsbeispiele werden das Gewinde und die Schraubverbindung näher erläutert. Es zeigen:
- FIG 1: einen Längsschnitt durch eine Schraubverbindung mit einer in einen Flansch eingeschraubten Schraube,
- FIG 2A,3A,4A,5A: einen Ausschnitt einer Schraubverbindung analog zur FIG 1 in kaltem Zustand und
- FIG 2B,3B,4B,5B: den jeweils korrospondierenden Ausschnitt bei einer hohen Anwendungstemperatur.

Gleiche Bezugszeichen haben in sämtlichen Figuren jeweils die gleiche Bedeutung.

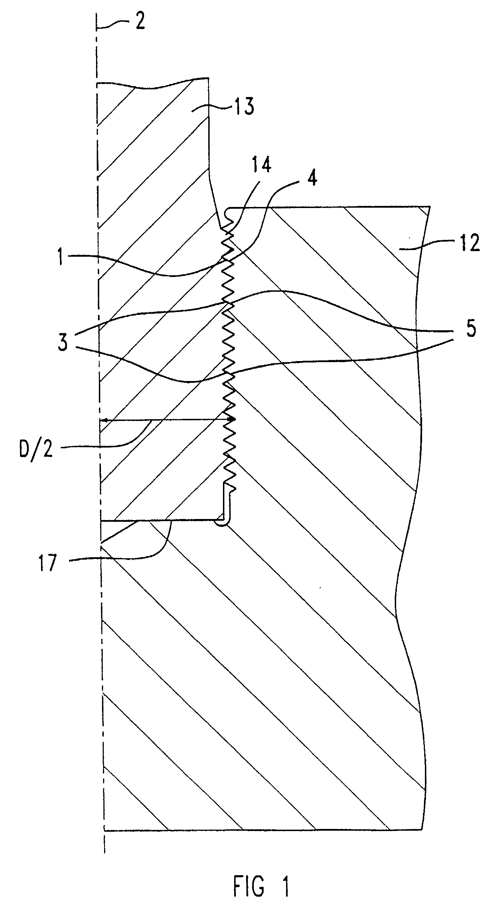

In FIG 1 ist in einem Längsschnitt eine Schraubverbindung in einem Flansch 12 einer nicht dargestellten Dampfturbine gezeigt. Der Flansch 12 weist ein als Mutterngewinde ausgeführtes Gegengewinde 4 auf. In das Gegengewinde 4 (Mutterngewinde 4) ist eine sich entlang einer Schraubenachse 2 erstreckende Schraube 13 eingeschraubt. Die Schraube 13 weist ein als Bolzengewinde ausgeführtes Gewinde 1 auf, welches in das Mutterngewinde 4 eingreift. Das Bolzengewinde 1 weist eine Gewindestruktur 3 und das Mutterngewinde 4 eine Gegengewindestruktur 5 auf. Aufgrund der Rotationssymmetrie der Schraube 13 bezüglich der Schraubenachse 2 ist der Längsschnitt durch die Schraube 13 nur hälftig dargestellt. Die Schraube 13 weist eine zur Schraubenachse 2 senkrechte Stirnfläche 17 auf, mit der die Schraube 13 am tiefsten in den Flansch 12 eingeschraubt ist. Der Bereich von dem ab die Schraube 13 aus dem Mutterngewinde 4 des Flansches 12 hinausragt, wird als Eingriffanfangsbereich 14 des Gewindes 1 in das Gegengewinde 4 bezeichnet. Dieser Bereich ist bei konventionellen Gewinden der für die Dauerhaltbarkeit der Schraubverbindung maßgebende Bereich.

Für eine in FIG 1 dargestellte Schraubverbindung mit einer Stiftschraube 13 M120x6 unter einer angenommenen Schaftspannung von 250 N/mm² bei einer Temperatur von 600 °C sind nachfolgende numerische Berechnungsergebnisse erzielt worden. Bei diesen Berechnungen wurde für den Flansch 12 das thermische Ausdehnungsverhalten eines 10%-Chrom-Stahls (X12CrMoWVNbN10-1-1) angenommen. Dieser Stahl weist bei einer Temperatur zwischen 20 °C und 600 °C einen mittleren Wärmeausdehnungsoffizienten von 12.7x10⁻⁶/K auf. Bei Verwendung eines 11%-Chrom-Stahls (X19CrMoVNbNll-l) für die Schraube 13, zeigen sich in dem Eingriffanfangsbereich 14 lokale Spannungsüberhöhungen, welche allerdings das Tragverhalten des Gewindes 1 bei Temperaturen unterhalb der Grenztemperatur des hochwarmfesten nichtaustenitischen Schraubenstahls von etwa 560 °C nicht beeinträchtigen. Diese lokalen Spannungsüberhöhungen resultieren aus den unterschiedlichen Steifigkeiten der Schraube 13 und des Flansches 12.

Bei Verwendung eines Nickelbasis-Werkstoffes für die Schraube, z.B. Nimonic 80A, mit einem konventionellen Gewinde zeigt sich aufgrund der unterschiedlichen Wärmeausdehnungskoeffizienten eine starke Spannungsüberhöhung im Eingriffanfangsbereich 14. Dies führt, wie Finite-Elemente-Berechnungen unter Einbeziehung plastischen Materialsverhaltens zeigen, zu großen plastischen Dehnungen im Flansch 12, die der Bruchdehnung des Flanschwerkstoffes entsprechen können. Bei thermischen Lastwechseln könnte dies unter Umständen zu einem Versagen der Gewindegänge im Flansch 12 führen. Der mittlere Wärmeausdehnungskoeffizient von Nimonic 80A beträgt bei 600 °C etwa 15x10⁻⁶/K.

Bei Verwendung einer Schraube 13 aus dem Werkstoff Nimonic 80A mit einer kegeligen Ausführung des Gewindes 1 (Bolzengewindes 1) mit einem Kegelwinkel von etwa 0,3° resultiert im Eingriff anfangsbereich 14 ein Spannungszustand, welcher dem Spannungszustand bei Verwendung eines 11%-Chrom-Stahls für die Schraube 13 entspricht. Ein Kegelwinkel von etwa 0,3° entspricht in diesem Fall im Eingriffanfangsbereich 14 einer Durchmesser-Reduzierung von etwa 0,6 mm. Eine weitere Homogenisierung des Tragverhaltens, d.h. Entlastung des Eingriffanfangsbereichs 14 kann durch eine geringfügige Erhöhung des Kegelwinkels zum Ausgleich der Steifigkeitsunterschiede zwischen Schraube 13 und Flansch 12 erfolgen. Bei der kegeligen Ausführung des Gewindes 1 treten bei niedrigen Temperaturen von etwa 20 °C (Montagezustand) in den tieferen Gewindegängen, d.h. im Bereich der Stirnfläche 17, erhöhte Belastungen auf, die allerdings aufgrund der höheren Belastbarkeit des Schraubenwerkstoffes und des Flanschwerkstoffes im kalten Zustand unkritisch sind. Diese erhöhten Belastungen können dadurch reduziert werden, daß im Bereich der Stirnfläche 17 ein konventionelles zylindrisches Gewinde, vorzugsweise mit konstantem Durchmesser D, eingesetzt wird.

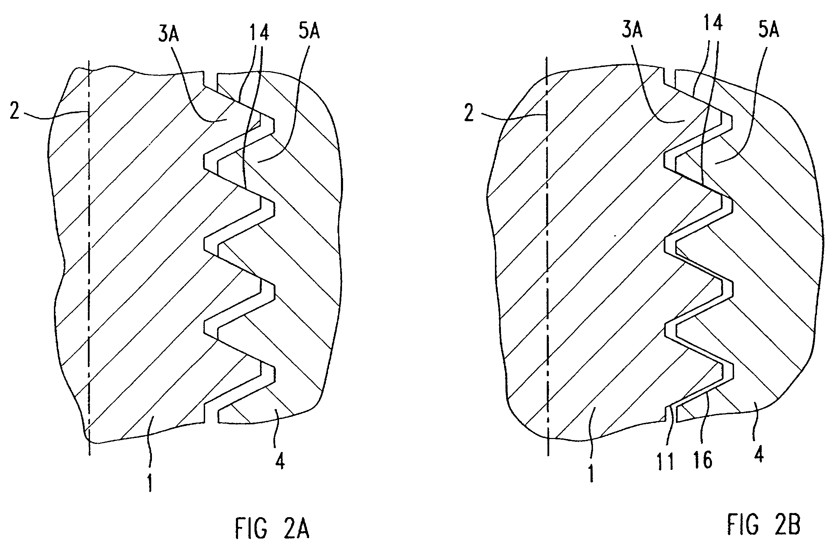

FIG 2A zeigt einen Ausschnitt durch eine Schraubverbindung mit einem Bolzengewinde 1 und einem Mutterngewinde 4 im kalten Zustand, bei dem die Gewindezähne 3A des Bolzengewindes 1 mit einer Flanke 11 an einer jeweiligen Flanke 16 eines zugeordneten Gewindezahnes 5A des Mutterngewindes 4 anliegen. Das Bolzengewinde 1 besteht hierbei aus einem Material mit einem höheren Wärmeausdehnungskoeffizienten als das Material des Mutterngewindes 4. Bei einer Erhöhung der Temperatur, beispielsweise auf eine Anwendungstemperatur von 600 °C, führt die unterschiedliche thermische Ausdehnung der Schraube 13 gegenüber dem Flansch 12 dazu, daß die tiefer liegenden Gewindezähne 3A mit ihren Flanken 11 von den zugeordneten Flanken 16 der Gewindezähne 5A abheben oder zumindest entlastet werden (siehe FIG 2B). Dies führt dazu, daß nicht mehr alle Gewindezähne 3A und 5A lasttragend sind, sondern der Lastabtrag fast vollständig über die Gewindezähne 3A und 5A des Eingriffanfangsbereiches 14 erfolgt. Dies führt bei erhöhten Temperaturen zu einer unter Umständen kritischen Belastung des Eingriffanfangsbereiches 14. Die Schraubverbindung ist vorzugsweise bereits im kalten Zustand vorgespannt.

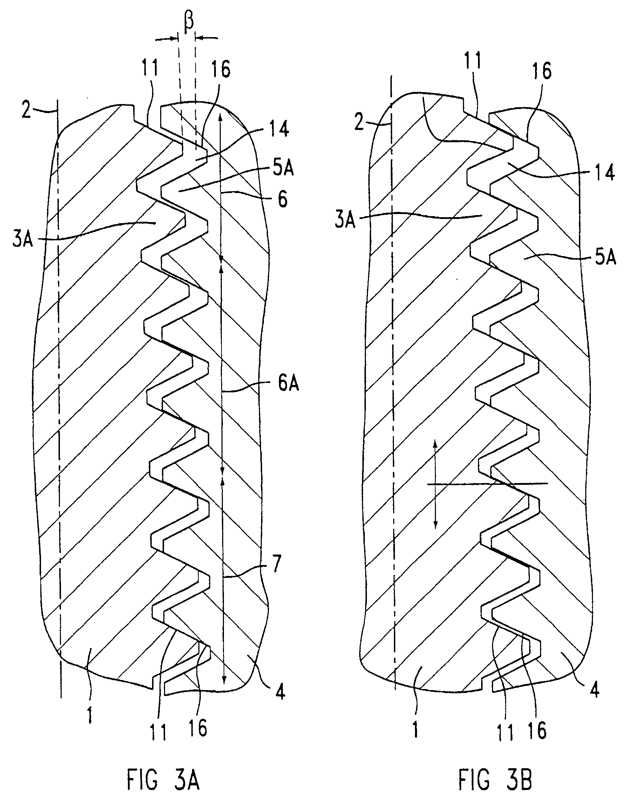

In FIG 3A ist ein Gewinde 1 mit einer Durchmesservariation in Eingriff mit einem Gegengewinde 4 (Mutterngewinde 4) im kalten Zustand dargestellt. In dem der Stirnfläche 17 zugewandten Gewindebereich 7 weist das Gewinde 1 eine zylindrische Gewindestruktur mit konstantem Durchmesser D auf. In dem Gewindebereich 7 liegen die der Stirnseite 17 abgewandten Flanken 11 der Gewindezähne 3A unmittelbar an den jeweiligen Flanken 16 der zugeordneten Gewindezähne 5A des Mutterngewindes 4 an. In der Umgebung des Eingriffanfangsbereichs 14 weist das Gewinde 1 einen kegeligen Gewindebereich 6 auf, dessen Kegelwinkel β entsprechend zu erwartender thermischer und elastischer Dehnungen bei einer vorgegebenen Anwendungstemperatur des Gewindes 1 bemessen ist. Zwischen dem Gewindebereich 6 und dem Gewindebereich 7 liegt ein Gewindebereich 6A vor, in dem ebenfalls das Gewinde 1 kegelförmig ausgeführt ist. Der zugeordnete Kegelwinkel ist hierbei entsprechend zu erwartender thermischer Dehnungen bemessen. Die Variation des Durchmessers D im Bereich der kegeligen Gewindebereiche 6, 6A ist zur Veranschaulichung stark überhöht dargestellt. Bei einer erhöhten Temperatur, insbesondere der Anwendungstemperatur des Gewindes 1 finden unterschiedliche thermische Dehnungen der Schraube 13 (höherer thermischer Ausdehnungskoeffizient) und des Flansches 12 (niedrigerer thermischer Ausdehnungskoeffizient) statt. Im Gewindebereich 6 kommen die Flanken 11 und 16 unter elastischer und thermischer Verformung in vollen Eingriff (siehe FIG 3B). Im Gewindebereich 6A kommen die Flanken 11 und 16 unter der thermischen Dehnung zu einem vollen Eingriff. Hierdurch wird eine Vergleichmäßigung des Tragverhaltens und dadurch eine teilweise oder vollständige Entlastung des Eingriffanfangsbereiches 14 erreicht. Die im kalten Zustand im Gewindebereich 7 tragenden Flanken 11 und 16 heben bei erhöhter Temperatur voneinander ab oder werden zumindest entlastet.

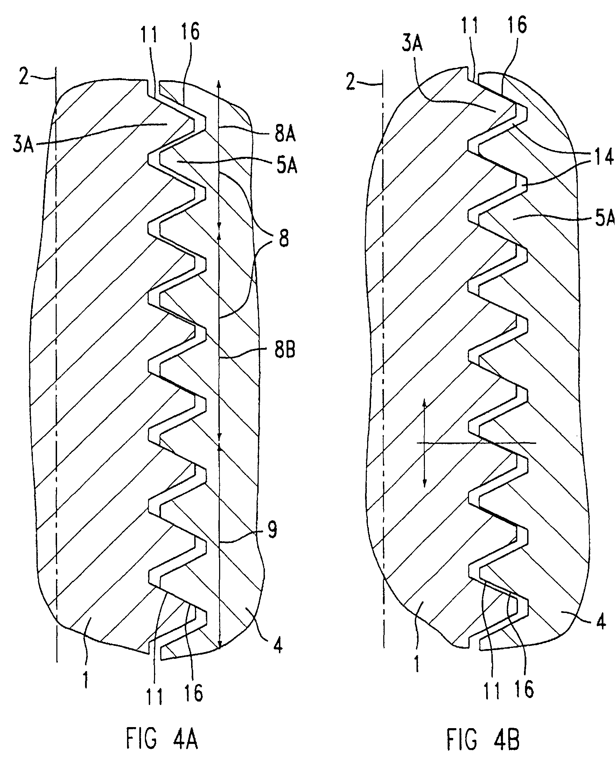

In FIG 4A ist eine Schraubverbindung dargestellt, bei der das Gewinde 1 eine Teilungsvariation aufweist. Im Eingriffanfangsbereich 14 liegt ein Gewindebereich 8A mit veränderter Teilung vor, die entsprechend zu erwartender thermischer und elastischer Dehnungen bestimmt ist. An den Gewindebereich 8A grenzt ein Gewindebereich 8B an, dessen Teilung im Hinblick auf eine zu erwartende thermische Dehnung verändert ist. Die Gewindebereiche 8A und 8B bilden einen Gewindebereich 8 in dem eine veränderte Teilung des Gewindes 1 vorliegt. An den Gewindebereich 8 schließt sich zur Stirnfläche 17 hin ein Gewindebereich 9 mit einer normalen Teilung an, so daß im kalten Zustand die Flanken 11 und 16 aneinander liegen und dadurch eine durch eine Vorspannung gegebene Last abtragen. Die Flanken 11 und 16 im Gewindebereich 8 sind zumindest (teilweise) entlastet oder sogar voneinander beabstandet. Die Teilungsvariation ist zur Veranschaulichung ebenfalls überhöht dargestellt. Bei einer Erhöhung der Temperatur tritt der oben bereits beschriebene Effekt auf (siehe FIG 4B), daß die Flanken 11,16 in dem Gewindebereich 8 infolge elastischer und thermischer oder nur thermischer Dehnungen in vollen Eingriff gelangen und somit ein vergleichmäßigtes Tragverhalten und eine Entlastung des Eingriffanfangsbereiches 14 erreicht ist. Die Flanken 11 und 16 im Gewindebereich 9 werden bei einer Erhöhung der Temperatur entlastet oder heben sogar voneinander ab.

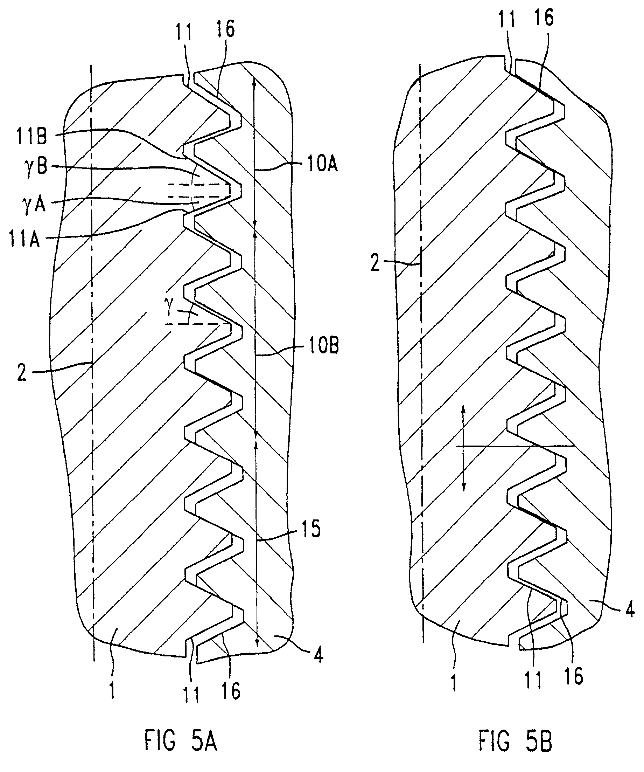

In FIG 5A ist ein Ausschnitt aus einem Gewinde 1 mit einer Variation des Gewindeprofils dargestellt, wobei die Variation des Gewindeprofils hier durch Verwendung eines ungleichen Teilflankenwinkels der Gewindezähne 3A erreicht ist. Die der Stirnfläche 17 abgewandten Flanken 11B (steigende Flanken) weisen einen Flankenwinkel γB auf, welcher größer ist als der Flankenwinkel γA der der Stirnfläche 17 zugewandten Flanken 11A (fallende Flanken). In einem Gewindebereich 15, welcher an die Stirnfläche 17 angrenzt, ist das Gewindeprofil des Gewindes 1 konventionell gewählt, so daß bei einer Vorspannung in elastischem Zustand die Flanken 11 und 16 aneinander liegen und die durch die Vorspannung bedingte Last abtragen. Der sich an den Gewindebereich 15 anschließenden Gewindebereiche 10A, 10B weisen Gewindezähne mit unterschiedlichem Teilflankenwinkel y auf. In dem dem Eingriffanfangsbereich 14 zugeordneten Gewindebereich 10A ist das Gewindeprofil entsprechend der zu erwartenden thermischen oder elastischen Dehnungen bestimmt. In dem zwischen dem Gewindebereich 10A und 15 liegenden Gewindebereich 10B ist das Gewindeprofil nach der zu erwartenden thermischen Dehnung bestimmt. Bei einer Erhöhung der Temperatur (siehe FIG 5B) gelangen die Flanken 11 und 16, wie bereits oben zu den Figuren 3B und 4B erläutert, unter elastischer und/oder thermischer Verformung im vollen Eingriff, wodurch eine Vergleichmäßigung des Tragverhaltens entsteht. Auch in diesem Fall werden die Flanken 11 und 16 in dem Gewindebereich 15 entlastet oder heben völlig voneinander ab.

Es versteht sich, daß die oben beschriebenen Ausführungsformen sowie weitere Gestaltungsmöglichkeiten der Gewindebereiche je nach Anforderungen und Materialwahl miteinander kombinierbar sind. Je nach Auslegung der Schraube 13 und des Flansches 12 können Gewindebereiche 7,9,15 zum Lastabtrag im kalten Zustand mit unmodifiziertem Profil Anwendung finden, weggelassen oder je nach Anforderung modifiziert werden.

Die Erfindung zeichnet sich durch ein Gewinde aus, welches so gefertigt ist, daß es zumindest bei der vorgesehenen Anwendungstemperatur und/oder der vorgesehenen elastischen Belastung eine Form besitzt, die ein vergleichmäßigtes Tragverhalten bewirkt. Hierdurch ist eine Entlastung des sonst hochbelasteten und für die Dauerhaltbarkeit maßgebenden Eingriffanfangsbereiches erreicht. Weiterhin weist das Gewinde bevorzugt einen Gewindebereich konventioneller Art auf, der für eine verbesserte Übertragbarkeit der Schraubenkraft im kalten Zustand sorgt. Dadurch ist eine Vergleichmäßigung der Lastaufnahme und Lastverteilung im Gewinde über die gesamte Gewindelänge sowie über einen ausgedehnten Temperaturbereich gewährleistet.

## Patentansprüche

1. Gewinde (1), welches sich entlang einer Gewindeachse (2) erstreckt, eines ersten Bauteils mit einer Gewindestruktur (3) für einen Eingriff in ein Gegengewinde (4) eines zweiten Bauteils mit einer Gegengewindestruktur (5) zur Herstellung einer Schraubverbindung, wobei das elastische und/ oder thermische Verformungsverhalten des ersten Bauteils und des zweiten Bauteils voneinander verschieden sind, wobei die Gewindestruktur (3) eine Verformungsvorwegnahme zur Kompensation einer elastischen und/oder thermischen Verformung bei einer vorgebbaren thermomechanischen Belastung sowie einen zylindrischen Gewindebereich (7) konstanten Durchmessers (D) aufweist,
**dadurch gekennzeichnet, daß** ein weiterer Gewindebereich (6,6A) vorgesehen ist, der axial an den zylindrischen Gewindebereich (7) angrenzt, wobei in dem weiteren Gewindebereich (6,6A) der Durchmesser (D) entlang der Gewindeachse (2) variiert.

2. Gewinde (1) nach Anspruch 1, bei dem das erste Bauteil ein erstes Material und das zweite Bauteil ein zweites Material aufweist, wobei das erste Material von dem zweiten Material verschieden ist.

3. Gewinde (1) nach Anspruch 1 oder 2, dessen Durchmesser (D) entlang der Gewindeachse (2) in dem weiteren Gewindebereich (6,6A) monoton zunimmt.

4. Gewinde (1) nach Anspruch 3, dessen Durchmesser (D) eine Hüllkurve beschreibt, deren Tangente mit einer Parallelen zur Gewindeachse (2) einen spitzen Winkel (δ) einschließt, welcher Winkel (δ) monoton abnimmt.

5. Gewinde (1) nach Anspruch 3, dessen Gewindestruktur (3) zumindest in einem Gewindebereich (6) kegelförmig mit einem gegenüber der Gewindeachse (2) spitzen Kegelwinkel (β) ausgeführt ist.

6. Gewinde (1) nach Anspruch 5, bei dem der Kegelwinkel (β) zwischen 0,1° und 1,0°, insbesondere etwa 0,3°, beträgt.

7. Gewinde (1) nach einem der Ansprüche 5 oder 6, bei dem sich an den kegelförmigen Gewindebereich (6) der zylindrische Gewindebereich (7) konstanten Durchmessers (D) anschließt.

8. Gewinde (1) nach einem der vorhergehenden Ansprüche, welches entlang der Gewindeachse (2) zumindest einen Gewindebereich (8) mit veränderter Teilung aufweist.

9. Gewinde (1) nach Anspruch 8, bei dem sich an den Gewindebereich (8) mit veränderter Teilung (3) ein Gewindebereich (9) mit konstanter Teilung anschließt.

10. Gewinde (1) nach einem der vorhergehenden Ansprüche, welches zumindest einen Gewindebereich (10) mit verändertem Gewindeprofil aufweist.

11. Gewinde (1) nach Anspruch 10, bei dem sich der Flankenwinkel (y) einer Flanke (11) entlang der Gewindeachse (2) ändert.

12. Gewinde (1) nach Anspruch 10 oder 11, bei dem die fallende Flanke (11A) und die steigende Flanke (11B) eines Gewindezahnes (3A) einen jeweils verschiedenen Flankenwinkel (γA,γB) aufweisen.

13. Gewinde (1) nach Anspruch 11 oder 12, bei dem sich an den Gewindebereich (10) mit veränderndem Gewindeprofil ein, insbesondere zylindrischer Gewindebereich (9) mit konstantem Gewindeprofil anschließt.

14. Gewinde (1) nach einem der vorhergehenden Ansprüche, welches ein Bolzengewinde oder ein Mutterngewinde ist.

15. Gewinde (1) nach einem der vorhergehenden Ansprüche, welches für einen Einsatz bei einer Anwendungstemperatur von über 500 °C, insbesondere über 580°C, ausgelegt ist.

16. Gewinde (1) nach einem der vorhergehenden Ansprüche, welches ein Bolzengewinde an einer Schraube (13) aus einer Nickelbasis-Legierung, einer Kobaltbasis-Legierung oder einem austenitischen Stahl ist.

17. Schraubverbindung für eine hohe Anwendungstemperatur mit einem Gewinde (1) nach einem der vorhergehenden Ansprüche, bei der bei einem Ineinandergreifen des Gewindes (1) mit dem Gegengewinde (4) bei einer Normaltemperatur unterhalb der Anwendungstemperatur ein Eingriffsanfangsbereich (14) entlastet ist, wobei dort ein Spiel zwischen der Gewindestruktur (3) und der Gegengewindestruktur (5) verbleibt.

18. Schraubverbindung für eine hohe Anwendungstemperatur mit einem Gewinde (1) nach einem der vorhergehenden Ansprüche an einem Flansch (12) einer Dampfturbine.

19. Schraubverbindung nach Anspruch 18, bei der der Flansch (12) aus einem Chromstahl mit einem Anteil von 9 Gew.% bis 12 Gew. Chrom besteht.

## Claims

1. Thread (1), which extends along a thread axis (2), of a first component with a thread structure (3) for engagement into a counterthread (4) of a second component with a counterthread structure (5), for making a screw connection, the elastic and/or thermal deformation behaviour of the first component and of the second component being different from one another, the thread structure (3) having an anticipation of deformation, in order to compensate elastic and/or thermal deformation under a predeterminable thermomechanical load, and a cylindrical thread region (7) of constant diameter (D), **characterized in that** a further thread region (6, 6A) is provided, which adjoins the cylindrical thread region (7) axially, the diameter (D) varying along the thread axis (2) in the further thread region (6, 6A).

2. Thread (1) according to Claim 1, wherein the first component has a first material and the second component has a second material, the first material being different from the second material.

3. Thread (1) according to Claim 1 or 2, of which the diameter (D) along the thread axis (2) varies, at least in regions, in particular increases monotonically.

4. Thread (1) according to Claim 3, the diameter (D) of which describes an enveloping curve, the tangent of which forms an acute angle (δ) with a line parallel to the thread axis (2), said angle (δ) decreasing monotonically.

5. Thread (1) according to Claim 3, the thread structure (3) of which has, at least in one thread region (6), a tapered design with a taper angle (β) which is acute in relation to the thread axis (2).

6. Thread (1) according to Claim 5, wherein the taper angle (β) amounts to between 0.1° and 1.0°, in particular to about 0.3°.

7. Thread (1) according to one of Claims 5 or 6, wherein the tapered thread region (6) is followed by the cylindrical thread region (7) of constant diameter (D).

8. Thread (1) according to one of the preceding claims, which has, along the thread axis (2), at least one thread region (8) with varied pitch.

9. Thread (1) according to Claim 8, wherein the thread region (8) with varied pitch (3) is followed by a thread region (9) with constant pitch.

10. Thread (1) according to one of the preceding claims, which has at least one thread region (10) with a varied thread profile.

11. Thread (1) according to Claim 10, wherein the flank angle (γ) of a flank (11) changes along the thread axis (2).

12. Thread (1) according to Claim 10 or 11, wherein the falling flank (11A) and the rising flank (11B) of a thread tooth (3A) have a flank angle (γA, γB) which is different in each case.

13. Thread (1) according to Claim 11 or 12, wherein the thread region (10) with a varying thread profile is followed by an, in particular, cylindrical thread region (9) with a constant thread profile.

14. Thread (1) according to one of the preceding claims, which is a bolt thread or a nut thread.

15. Thread (1) according to one of the preceding claims, which is designed for use at an application temperature of above 500°C, in particular above 580°C.

16. Thread (1) according to one of the preceding claims, which is a bolt thread on a screw (13) composed of a nickel-based alloy, a cobalt-based alloy or an austenitic steel.

17. Screw connection for a high application temperature, with a thread (1) according to one of the preceding claims, in which, when the thread (1) and the counterthread (4) engage one into the other at a normal temperature below the application temperature, an initial engagement region (14) is relieved, in particular a play remains there between the thread structure (3) and the counterthread structure (5).

18. Screw connection for a high application temperature, with a thread (1) according to one of the preceding claims, on a flange (12) of a steam turbine.

19. Screw connection according to Claim 18, wherein the flange (12) consists of a chromium steel with a fraction of 9% by weight to 12% by weight of chromium.

## Revendications

1. Filetage (1), qui s'étend le long d'un axe (2) de filetage, d'une première pièce ayant une structure (3) de filetage pour s'engager dans un taraudage (4) complémentaire d'une deuxième pièce ayant une structure (5) de taraudage complémentaire, afin de réaliser un assemblage vissé, les comportements de déformation élastique et/ou thermique de la première pièce et de la deuxième pièce étant différents, la structure (3) de filetage présentant une anticipation de déformation afin de compenser une déformation élastique et/ou thermique lors d'une sollicitation thermomécanique pouvant être prescrite, et possédant une région (7) de filetage cylindrique de diamètre (D) constant,
**caractérisé en ce qu'**il est prévu une autre région (6, 6A) de filetage qui est axialement limitrophe de la région (7) de filetage cylindrique, le diamètre (D) variant le long de l'axe (2) de filetage dans l'autre région (6, 6A) de filetage.

2. Filetage (1) suivant la revendication 1, suivant lequel la première pièce comporte un premier matériau et la deuxième pièce un deuxième matériau, le premier matériau étant différent du deuxième matériau.

3. Filetage (1) suivant la revendication 1 ou 2, dont le diamètre (D) augmente de façon monotone le long de l'axe (2) de filetage dans l'autre région (6, 6A) de filetage.

4. Filetage (1) suivant la revendication 3, dont le diamètre (D) décrit une enveloppante dont la tangente forme un angle (δ) aigu avec une parallèle à l'axe (2) de filetage, l'angle (δ) diminuant de façon monotone.

5. Filetage (1) suivant la revendication 3, dont la structure (3) de filetage est réalisée, au moins dans une région (6) de filetage, conique avec un angle (β) de cône aigu par rapport à l'axe (2) de filetage.

6. Filetage (1) suivant la revendication 5, suivant lequel l'angle (β) de cône est compris entre 0,1° et 1,0°, notamment est égal à environ 0,3°.

7. Filetage (1) suivant la revendication 5 ou 6, suivant lequel la région (7) de filetage cylindrique de diamètre (D) constant se raccorde à la région (6) de filetage conique.

8. Filetage (1) suivant l'une des revendications précédentes, qui comporte, le long de l'axe (2) de filetage, au moins une région (8) de filetage de pas variable.

9. Filetage (1) suivant la revendication 8, suivant lequel une région (9) de filetage de pas constant se raccorde à la région (8) de filetage de pas (3) variable.

10. Filetage (1) suivant l'une des revendications précédentes, qui comporte au moins une région (10) de filetage de profil de filetage variable.

11. Filetage (1) suivant la revendication 10, suivant lequel l'angle (γ) de flanc d'un flanc (11) varie le long de l'axe (2) de filetage.

12. Filetage (1) suivant la revendication 10 ou 11, suivant lequel le flanc (11A) descendant et le flanc (11B) ascendant d'une dent (3A) de filetage possèdent un angle (γA, γB) de flanc respectif différent.

13. Filetage (1) suivant la revendication 11 ou 12, suivant lequel une région (9) de filetage, notamment cylindrique, de profil de filetage constant se raccorde à la région (10) de filetage de profil de filetage variable.

14. Filetage (1) suivant l'une des revendications précédentes, qui est un filetage de boulon ou un filetage d'écrou.

15. Filetage (1) suivant l'une des revendications précédentes, qui est prévu pour être employé à une température d'utilisation supérieure à 500°C, notamment supérieure à 580°C.

16. Filetage (1) suivant l'une des revendications précédentes, qui est un filetage de boulon sur une vis (13) en alliage à base de nickel, en alliage à base de cobalt ou en acier austénitique.

17. Assemblage vissé pour une température d'utilisation élevée, au moyen d'un filetage (1) suivant l'une des revendications précédentes, suivant lequel, lors de l'engagement du filetage (1) avec le taraudage (4) complémentaire à une température normale inférieure à la température d'utilisation, une région (14) initiale d'engagement est soulagée, de sorte qu'un jeu y reste présent entre la structure (3) de filetage et la structure (5) de taraudage complémentaire.

18. Assemblage vissé pour une température d'utilisation élevée, au moyen d'un filetage (1) suivant l'une des revendications précédentes, sur une bride (12) d'une turbine à vapeur.

19. Assemblage vissé suivant la revendication 18, suivant lequel la bride (12) est réalisée en acier au chrome ayant une teneur en chrome de 9% (en poids) à 12% (en poids).
